# EUROPÄISCHE PATENTSCHRIFT

(11) **EP 0 863 158 B1**
(45) Veröffentlichungstag und Bekanntmachung des Hinweises auf die Patenterteilung: **24.11.2004**
(21) Anmeldenummer: 98103409.3
(22) Anmeldetag: 27.02.1998
(51) Int. Cl.: C08B 11/02, C08B 11/08, C08B 11/193, C08F 2/20

(54) **2-Propenylgruppen enthaltende Celluloseether und deren Verwendung als Schutzkolloide bei Polymerisationen**
Cellulose ethers containing 2-propenyl groups and their use as protecting colloids during polymerisations
Ethers de cellulose contenant des groupes 2-propenyles et leurs utilisation comme colloides protecteurs pour les polymerisation

(30) Priorität: 03.03.1997 DE 19708531
(43) Veröffentlichungstag der Anmeldung: 09.09.1998
(73) Patentinhaber: SE Tylose GmbH & Co.KG, 65203 Wiesbaden (DE)
(72) Erfinder: Dönges, Reinhard, Dr., 65812 Bad Soden (DE); Ehrler, Rudolf, Dr., 65439 Flörsheim (DE); Wurm, Horst, 65201 Wiesbaden (DE)
(74) Vertreter: Plate, Jürgen, Dr.

(56) Entgegenhaltungen:
- US-A- 4 906 744
- US-A- 5 504 123
- DATABASE WPI Week 8651 Derwent Publications Ltd., London, GB; AN 86-334245 XP002096690 "Allyl-cellulose deriv. prepn. - by reacting cellulose ether(s) or ester(s) with allyl halide, while dissolved in DMSO and in presence of alkali" & JP 61 247702 A (OJI PAPER CO) , 5. November 1986

## Beschreibung

Die Herstellung von Vinylpolymeren durch radikalische Polymerisation in wäßrigem, lösemittelfreiem Medium macht eine Emulgierung der hydrophoben Monomeren und nach erfolgter Polymerisation die Stabilisierung des Polymers erforderlich. Bei der Polymerisation von Monomersystemen, die wasserunlösliche Vinylmonomere enthalten, in wäßrigen Systemen werden daher neben Tensiden auch Schutzkolloide benötigt, die einerseits hydrophilen Charakter besitzen, andererseits auch eine dispergierende Wirkung aufweisen sollen.

Die Qualität einer Kunststoffdispersion wird entscheidend durch die Wahl des Schutzkolloids beeinflußt. Wichtige Qualitätskriterien, die durch die Schutzkolloide beeinflußt werden können sind beispielsweise die Stabilität, Viskosität, Rheologie, die Teilchengröße der Polymerpartikel der Dispersion sowie die Koagulatmenge, die bei der Filtration der Dispersion durch ein Sieb zurückbleibt. Auch das Molekulargewicht wird durch das Schutzkolloid beeinflußt. Ein weiteres Qualitätskriterium ist die Wasseraufnahme eines Filmes, der nach Ausbringen und Trocknung einer Dispersion hergestellt wurde. Auch diese Eigenschaft wird durch das Schutzkolloid beeinflußt. Bei der Suspensionspolymerisation steuert das Schutzkolloid die Teilchengröße des gebildeten Polymerisats.

Es ist seit langem bekannt, daß polymere Kohlenhydrate wie Stärke, Dextrane und wasserlösliche Cellulosederivate geeignete Schutzkolloide für wasserhaltige Polymerisationssysteme darstellen. Das in der kommerziellen Herstellung von Polyvinylacetat-Dispersion am häufigsten eingesetzte Schutzkolloid ist Hydroxyethylcellulose (Cellulose and its Derivates, Kap. 26, Ellis Horwood Limited 1985), die in technischem Maßstab aus Zellstoff und Ethylenoxid hergestellt wird.

Als entscheidender Vorgang beim Einsatz von Schutzkolloiden in der Emulsionspolymerisation wird die Radikalbildung am Schutzkolloid und anschließende Pfropfung des Monomers auf das Kolloid angesehen. Die Pfropfrate hängt von der Wahl des Radikalinitiators ab. Als Radikalstarter werden üblicherweise Diazoverbindungen, Redox-Initiatoren, organische oder anorganische Peroxoverbindungen eingesetzt. Andererseits ist die Pfropfrate auch von der Natur des Schutzkolloids abhängig. Ist die Pfropfrate gering, muß die Konzentration des Schutzkolloids entsprechend hoch gewählt werden, um eine ausreichende Wirkung zu erzielen. Eine hohe Schutzkolloid-Konzentration ist jedoch einerseits aus Kostengründen unerwünscht, andererseits führt sie auch zu einer erhöhten Hydrophilie des zu einem Film ausgezogenen Polymers, verbunden mit einer erhöhten Wasseraufnahme.

In US-A 4,845,175 wird gezeigt, daß durch Einsatz von hydrophob mit Arylalkylgruppen modifizierter Hydroxyethylcellulose die Menge des Schutzkolloids reduziert werden kann. Jedoch erfordert die Herstellung hydrophob modifizierter Hydroxyethylcellulose teure Reagenzien, die teilweise über mehrere Stufen synthetisiert werden müssen.

In US-A 5,049,634 wird aufgezeigt, daß Kohlenhydrate für radikalische Pfropfungen besser zugänglich werden, wenn 2-Propenylgruppen (im folgenden Allylgruppen genannt) am Polymer gebunden sind. Durch Vorbehandlung von Stärke mit Allylglycidylether werden Allylgruppen-haltige Stärkederivate und deren Pfropfung mit Acetal- oder Aldehyd-haltigen Monomeren beschrieben. CS-A 263 561 beschreibt die Aufpfropfung von Acrylamid auf nach einem speziell in Dioxan-Suspension hergestellten Allylgruppen-haltigen Kohlenhydratpolymeren.

Die Herstellung und die Polymerisierbarkeit Allylgruppen-haltiger Cellulosederivate in Lösung wurden bereits in der Literatur beschrieben. Aus DE-A 14 18 271 ist zu entnehmen, daß Lösungen von Allylgruppen-haltigen Polymeren durch Zusatz von Radikalstartern Gele bilden. In EP-A 0 541 939 werden Allylglycidylether-haltige polymere Cellulosederivate beansprucht, die bei einem Substitutionsgrad von 0,05 bis 0,5 Allylglycidylgruppen pro monomere Kohlenhydrateinheit ebenfalls polymerisierbar sind. Der Zusatz derart modifizierter Kohlenhydrate erhöht die Scheuerfestigkeit von Dispersionsfarben. US-A 5,504,123 beschreibt Celluloseether mit einem ungesättigten (C₄-C₂₀)-Alkylrest als Additive für Dispersionsfarben. Als Vorteil werden verbesserte Filmbildeeigenschaften genannt.

Polymerisierbare Alkenylgruppen-haltige Methylhydroxypropylcelluloseether und deren Verwendung bei der Herstellung von Folien und Beschichtungen werden in EP-B 0 457 092 beschrieben. Der molare Substitutionsgrad wird mit 0,05 bis 1,0 angegeben.

In SU-A 1 484 814 ist beschrieben, daß allylgruppenhaltige Cellulosederivate, die einen Substitutionsgrad an Allylethergruppen von 0,04 bis 0,3 und einen Polymerisationsgrad von 1000 bis 1200 aufweisen, mit Vinylacetat gepfropft werden können. Für den praktischen Einsatz in Polymerisationssystemen sind Schutzkolloide mit sehr hohen Polymerisationsgraden weniger günstig, da sie hohe Viskositäten, verbunden mit Rühr- und Förderproblemen verursachen.

Die Aufgabe der Erfindung war es, neuartige Schutzkolloide für Polymerisationen in wäßrigen Systemen zu entwickeln, die bei reduzierter Einsatzmenge und guter Verarbeitbarkeit die gleiche oder bessere Qualität der hergestellten Kunststoffdispersionen oder -suspensionen gewährleisten.

Es wurde gefunden, daß hydrophile Allylgruppen-haltige nichtionische Cellulosederivate mit einem durchschnittlichen Polymerisationsgrad unterhalb von 900 hervorragend als Schutzkolloide in der Emulsionspolymerisation geeignet sind, wenn der Substitutionsgrad bezüglich Allylgruppen größer oder gleich 0,01 ist, jedoch 0,04 Allylgruppen pro Monomereinheit nicht übersteigt. Bei Verwendung derartiger Schutzkolloide ist eine wesentlich geringere Einsatzmenge gegenüber herkömmlichen keine Allylgruppen-enthaltenden Schutzkolloiden erforderlich.

Gegenstand der Erfindung sind daher wasserlösliche, nichtionische Celluloseether aus der Gruppe der Alkylcellulosen und Hydroxyalkylcellulosen mit einem durchschnittlichen Polymerisationsgrad unterhalb von 900, die durchschnittlich mit 0,01 bis 0,04 2-Propenyl-gruppen pro Anhydroglucoseeinheit substituiert sind.

Bevorzugter Gegenstand der Erfindung sind Celluloseether mit der allgemeinen Formel

[C₆H₇O₂(OR¹)(OR²)(OR³)]ₙ

wobei
- C₆H₇O₂: eine Anhydroglucoseeinheit,
- n: 50 - 500, insbesondere 100 - 300,
und R¹, R² und R³ unabhängig voneinander eine Polyalkylenoxidkette der allgemeinen Form 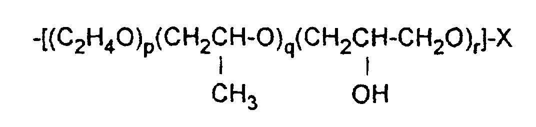 mit X = H, CH₃, C₂H₅ oder CH₂CH = CH₂
darstellt, worin
p, q und r unabhängig voneinander in R¹, R² und R³ jeweils unabhängig Werte von 0 bis 4 annehmen können, die Summe aller (p+q+r) addiert über R¹, R² und R³ pro Anhydroglucoseeinheit durchschnittlich größer als 1,3 und kleiner als 4,5, vorzugsweise 1,5 bis 3,0, ist und wobei die Reihenfolge der Oxyalkyleinheiten in der Polyalkylenoxidkette beliebig ist und die durchschnittliche Anzahl der CH₂CH = CH₂-Gruppen pro Anhydroglucoseeinheit (DS Allyl) 0,01 bis 0,04, vorzugsweise 0,02 bis 0,03, beträgt.

Erfindungsgemäße bevorzugte Celluloseether sind beispielsweise die 2-Propenylether von
Hydroxyethylcellulose (1,3 < p < 4,5, q = 0, r = 0),
Hydroxypropylcellulose (p = 0, 1,3 < q < 4,5, r = 0,
Dihydroxypropylcellulose (p = 0, q = 0, 1,3 < r < 4,5),
sowie Mischether der Celluloseether mit den genannten Hydroxyalkylsubstituenten.

Gegenstand der vorliegenden Erfindung sind auch Verfahren zur Herstellung der erfindungsgemäßen Celluloseether durch Veretherung von Cellulose mit einem Veretherungsmittel aus der Gruppe der Alkylhalogenide und der Alkylenoxide und Veretherung mit einem Allylhalogenid oder einem Allylglycidylether unter Basenkatalyse oder durch Veretherung von Celluloseethem aus der Gruppe der Alkylcellulosen und Hydroxyalkylcellulosen mit einem Allylhalogenid oder einem Allylglycidylether unter Basenkatalyse, vorzugsweise
A) durch Veretherung von Cellulose mit Ethylenoxid und/oder Propylenoxid und/oder Glycidalkohol und mit einem Allylhalogenid unter Basenkatalyse, vorzugsweise in einem Suspensionsmittel;
B) durch Veretherung von Hydroxyethylcellulose, Hydroxypropylcellulose, Dihydroxypropylcellulose oder einem Celluloseether mit mehreren der genannten Hydroxyalkylsubstituenten mit einem Allylhalogenid unter Basenkatalyse, vorzugsweise in einem Suspensionsmittel;
C) durch Veretherung von Cellulose mit Ethylenoxid und/oder Propylenoxid und/oder Glycidalkohol und mit einem Allylglycidether unter Basenkatalyse, vorzugsweise in einem Suspensionsmittel;
D) durch Veretherung von Hydroxyethylcellulose, Hydroxypropylcellulose, Dihydroxypropylcellulose oder einem Celluloseether mit mehreren der genannten Hydroxyalkylsubstituenten mit einem Allylglycidylether unter Basenkatalyse, vorzugsweise in einem Suspensionsmittel.

Als Suspensionsmittel werden vorzugsweise niedere Alkohole oder Ketone, beispielsweise Isopropanol, tert. Butanol oder Aceton im Gewichtsverhältnis zur Cellulose von 3:1 bis 30:1, vorzugsweise 8:1 bis 15:1 eingesetzt. Als Base finden üblicherweise wäßrige Lösungen von Alkalimetallhydroxiden, insbesondere Natriumhydroxid, Verwendung. Das Molverhältnis Base/Anhydroglucoseeinheit wird durch das eingesetzte Kohlenhydrat(derivat) vorgegeben. Für den Einsatz von Cellulose (Methode A und C) beträgt das Molverhältnis vorzugsweise zwischen 1,0 und 1,5, für bereits veretherte Produkte (Methode B und D) vorzugsweise zwischen 0,1 und 1,0 Mol Base pro Anhydroglucoseeinheit.

Der Wassergehalt der Reaktionsmischung liegt vorzugsweise zwischen 5 und 30, insbesondere zwischen 8 und 15 Mol Wasser pro Anhydroglucoseeinheit.

Nach Vorlegen des Suspensionsmittels, Zugabe der Cellulose und Alkalisierung mit der wäßrigen Base wird der Ansatz gut homogenisiert und ohne Wärmezufuhr, gegebenenfalls unter Kühlung, vorzugsweise 0,5 bis 2 h gerührt. Danach werden die Veretherungsreagentien (Epoxyalkane, Allylglycidether und/oder Allylhalogenide) gemeinsam oder nacheinander zugegeben. Der Ansatz wird dann auf die bevorzugte Temperatur von 60 bis 120°C, insbesondere 80 bis 100°C gebracht und vorzugsweise 2 bis 6 h lang erhitzt. Nach Abkühlen wird mit einer Säure, vorzugsweise Salzsäure, Salpetersäure oder Essigsäure vorzugsweise auf pH 6 bis 8 neutralisiert. Das Suspensionsmittel wird durch Dekantieren oder Filtrieren entfernt, der rohe Cellulosemischether kann durch Extraktion mit wäßrigen Alkoholen oder Ketonen mit einem bevorzugten Wasseranteil von 10 bis 50 Gew.-%, insbesondere Isopropanol, Ethanol und Aceton, von den anhaftenden Nebenprodukten, beispielsweise Polyglykolen, Glykolethem und Salzen befreit werden. Durch Trocknen im Vakuum oder bei Normaldruck bei 50 bis 120°C erhält man den gewünschten Cellulosemischether als farbloses bis leicht gelbliches Pulver.

Bei Bedarf kann der erfindungsgemäß gewünschte Polymerisationsgrad des Celluloseethers vor oder im Laufe seines Herstellungsprozesses durch Zugabe einer Peroxoverbindung, wie zum Beispiel Wasserstoffperoxid oder eines Peroxodisulfatsalzes oder eines anderen Oxidationsmittels, beispielsweise Natriumchlorit, eingestellt werden. Die genannten Methoden zum Molekulargewichtsabbau und ihre jeweilige technische Durchführung sind Stand der Technik (T. M. Greenway in "Cellulosic Polymers, Blends and Composites", Herausg. R. D. Gilbert, Carl Hanser Verlag München, 1994, S.178ff.).

Gegenstand der Erfindung ist auch die Verwendung der erfindungsgemäßen Celluloseether als Schutzkolloide bei der Herstellung von wäßrigen Polymerdispersionen durch radikalisch initiierte Polymerisation von ethylenisch ungesättigten Monomeren in wäßriger Emulsion.

Der Anteil der erfindungsgemäßen Celluloseether bei der Herstellung von derartigen Polymerdispersionen beträgt vorzugsweise 0,2 bis 5,0 Gew.-%, insbesondere 0,3 bis 1,0 Gew.-%, bezogen auf die Gesamtmenge der eingesetzten Monomeren.

Geeignete Monomere sind ethylenisch ungesättigte, radikalisch polymerisierbare Verbindungen, die an sich wasserunlöslich sind, beispielsweise einfache ethylenisch ungesättigte Kohlenwasserstoffe mit Kettenlängen von 2 bis 12 Kohlenstoffatomen, vorzugsweise Ethylen und Propylen;
Ester mit Kettenlängen zwischen 2 und 12 Kohlenstoffatomen der Acryl-, Methacryl-, Malein-, Fumar- oder Itaconsäure, vorzugsweise Ethyl-, Propyl- und Butylester;
Vinylester von unverzweigten und verzweigten Carbonsäuren mit Kettenlängen von 1 bis 12 Kohlenstoffatomen, insbesondere Vinylacetat und Versaticsäurevinylester; ethylenisch ungesättigte aromatische Verbindungen, vozugsweise Styrol;
ethylenisch ungesättigte Aldehyde und Ketone mit 3 bis 12 Kohlenstoffatomen, vorzugsweise Acrolein, Methacrolein und Methylvinylketon,
halogenhaltige ethylenisch ungesättigte Verbindungen, beispielsweise Vinylchlorid.

Besonders bevorzugt sind Gemische aus den genannten Monomeren, bei denen mindestens eine Komponente ein Vinylester, vorzugsweise Vinylacetat ist. Es können auch Gemische aus einer oder mehrerer der genannten Monomeren mit hydrophilen Monomeren, beispielsweise Acrylnitril, Acrylsäure, Methacrylsäure, Itaconsäure oder Mischungen derselben eingesetzt werden.

Vorzugsweise enthält eine wäßrige Polymerisationsrezeptur, in der die erfindungsgemäßen Celluloseether als Schutzkolloide eingesetzt werden, 10 bis 70 Gew.-%, vorzugsweise 30 bis 60 Gew.-%, der oben genannten Monomeren, sowie 0 bis 10 Gew.-% eines oder mehrerer Emulgatoren. Als Radikalstarter werden üblicherweise Diazoverbindungen, Redox-Initiatoren, organische oder anorganische Peroxoverbindungen in Mengen von 0,1 bis 3 Gew.-%, vorzugsweise 0,5 bis 1 Gew.-%, bezogen auf die Gesamtmenge der Monomere, eingesetzt. Weitere Hilfsstoffe, beispielsweise Puffersubstanzen oder Konservierungsstoffe, können zugesetzt werden.

Alle Komponenten können zu Beginn der Reaktion gemeinsam vorgelegt sein, wobei das Monomer, bzw. Monomergemisch durch Rühren oder andere Mischaggregate emulgiert wird. Durch Erhöhen der Temperatur wird der Polymerisationsvorgang in Gang gesetzt. Die erforderlichen Temperaturen sind abhängig vom verwendeten Initiatorsystem und betragen zwischen 40 und 120°C. Nach Anspringen der Reaktion kann durch die Exothermie der Reaktion auch eine Kühlung erforderlich werden. Das Ende der Reaktion ist an einem Abklingen der Exothermie zu erkennen. Zur Vervollständigung der Reaktion wird wahlweise eine Nachreaktion durch äußere Wärmezufuhr nachgeschaltet. Nach Abkühlen können Hilfsstoffe zur Einstellung eines pH-Wertes, wie zum Beispiel Puffer, Säuren oder Basen oder zur Stabilisierung, beispielsweise Konservierungsstoffe zugegeben werden. Wahlweise kann die Polymerisation auch mit einem Bruchteil, beispielsweise 10 bis 20 Gew.-% der Monomer- und Radikalstartermenge gestartet werden und nach Anspringen der Reaktion weiter Monomer und Radikalstarter zudosiert werden, vorzugsweise derart, daß die gewünschte Polymerisationstemperatur durch die Zugabe gesteuert wird.

Die erfindungsgemäß erhaltenenden Dispersionen werden mit folgenden Eigenschaften charakterisiert:

Viskosität der Dispersionen bei niedrigem Schergefälle (1,0 s⁻¹):

Für eine gute Verarbeitbarkeit und Stabilität der Dispersion ist vorzugsweise eine Viskosität zwischen 10.000 und 30.000 mPa·s, insbesondere 15.000 bis 25.000, erwünscht.

Viskosität der Dispersionen bei hohem Schergefälle (>250 s⁻¹):
Für eine gute Förderbarkeit der Dispersionen soll die Viskosität bei hohem Schergefälle vorzugsweise < 450 mPa·s (bei 250 s⁻¹), insbesondere 200 bis 420 mPa·s, sein.

Mittlere Teilchengröße der Dispersion:
Die mittlere Teilchengröße der Dispersion sollte vorzugsweise 200 bis 300 nm (gemessen bei einer Wellenlänge von 435 nm), sein, um ein unerwünschtes Absetzen der Dispersion (Serumbildung) zu verhindern.

Koagulatemenge nach Filtrieren der Dispersion durch ein 100µm- und 40µm-Sieb, ausgedrückt in mg Koagulat pro 1000 g Dispersion:
Die Dispersionen haben einen Koagulatanteil von <200 mg / kg Dispersion bei 100µm-Filtration und <300 mg / kg Dispersion bei 40µm-Filtration.

Wasseraufnahme der getrockneten Polymerfilme:
Die Dispersion wird auf eine Platte ausgegossen und zu einem Film getrocknet. Nach Behandlung mit Wasser wird durch die Gewichtszunahme die 1.
Wasseraufnahme (in Gew.-% des Eigengewichts des Polymerfilms) ermittelt. Nach erneutem Trocknen wird die 2. Wasseraufnahme ermittelt. Die 1. Wasseraufnahme ist in der Regel größer als die 2. Wasseraufnahme, da beim ersten Bewässern des Filmes die hydrophilen Komponenten (Emulgatoren, Schutzkolloid) herausgewaschen werden. Sie sollte vorzugsweise unter 25%, insbesondere zwischen 5 und 20 Gew.-%, liegen.

Zusätzlich zu den aufgeführten anwendungstechnischen Parametern spielt die Pfropfausbeute des eingesetzten Schutzkolloids eine wichtige Rolle. Eine hohe Pfropfausbeute signalisiert eine hohe Effizienz des Schutzkolloids. Zu hohe Pfropfausbeuten führen allerdings zu Vernetzungen der Polymerpartikel, verbunden mit hohen Koagulatanteilen und dilatantem Fließverhalten der Dispersion. Die Pfropfausbeute liegt vorzugsweise zwischen 15 und 30 %, insbesondere zwischen 20 und 25 %.

Der Einsatz der erfindungsgemäßen allylgruppenhaltigen Hydroxyethylcellulose bei der Herstellung von Vinyldispersionen besitzt den Vorteil, daß nur die Hälfte einer konventionellen, handelsüblichen Hydroxyethylcellulose eingesetzt werden muß, und daß die Dispersionen, die mit den erfindungsgemäß eingesetzten Schutzkolloiden hergestellt werden, von besserer Qualität sind. Dispersionen, die mit allylgruppenhaltiger Hydroxyethylcellulose hergestellt werden, die außerhalb der beanspruchten Substitutionsgrade liegen, sind von deutlich schlechterer Qualität (Vergleichsbeispiele).

### Beispiele

Die Angaben der Susbstitutionsgrade beziehen sich bei Hydroxyethylgruppen auf den molaren Substitutionsgrad (MS), bei den Allylgruppen auf den Grad der Substitution (DS). In beiden Fällen bringen diese Werte zum Ausdruck, wie hoch der Substitutionsgrad der betreffenden Gruppe pro Anhydroglucoseeinheit ist. Der reine Wirkstoffgehalt wird durch Abzug der Wasserfeuchte und des Restsalzgehaltes des Produktes bestimmt.
Tylomer® H20 ist eine Hydroxyethylcellulose mit einem durchschnittlichen Polymerisationsgrad n = 220 der Clariant GmbH, deren 2 %ige Lösung in Wasser eine Viskosität von ca. 20 mPa·s (nach Höppler bei 20 °C) ausbildet.

Tylomer® H200 ist eine Hydroxyethylcellulose mit einem durchschnittlichen Polymerisations-grad n = 480 der Clariant GmbH, deren 2 %ige Lösung in Wasser eine Viskosität von ca. 200 mPa·s (nach Höppler bei 20 °C) ausbildet.
Emulsogen® -Emulgatoren sind nichtionische Tenside der Clariant GmbH auf Basis oxethylierter Fettalkohole.

Die in den Beispielen angegebenen Teile und Prozente beziehen sich auf das Gewicht, soweit nicht anders vermerkt. Der Feststoffgehalt der in den folgenden Beispielen hergestellten Dispersionen beträgt ca. 55 %.

### Beispiel 1

### Herstellung einer Allylhydroxyethylcellulose mit einem Allyl-Substitutionsgrad von 0,03 nach Verfahren A.

In einem 2 I Glasreaktor mit Ankerrührer werden 85,3 g Fichtenzellstoff (95 %ig, 0,50 mol) in 784 g 87 %igem wäßrigem Isopropanol suspendiert. Nach Inertisieren mit Stickstoff läßt man unter Rühren bei 30 °C 48 g 50% ige NatriumhydroxidLösung (0,60 mol) zulaufen. Es wird noch einmal inertisiert, dann 30 min bei 30 °C gerührt. Man heizt auf 65 °C und gibt 2,0 g 35 %iges Wasserstoffperoxid in 5 ml E-Wasser zu und rührt 30 min bei 65 °C. Nach der Behandlung ist der Polymerisationsgrad der Cellulose auf n = 100 bis 200 abgebaut. Man kühlt auf 40 °C ab und läßt 66,1 g Ethylenoxid zulaufen und hält die Temperatur 1h lang bei 40 °C. Dann gibt man 39,5 g 37 %iger Salzsäure (0,40 mol) und nach 10 min Rühren 3,8 g Allylchlorid (0,05 mol) in 20 ml Isopropanol zu und rührt 5 h bei 70 °C. Nach Abkühlen wird mit 10 g Essigsäure neutralisiert. Das Produkt wird abgesaugt, viermal mit 83 %igem Isopropanol und zweimal mit Aceton ausgewaschen und bei 50 °C im Vakuumtrockenschrank getrocknet.
Eine 2 Gew-%ige wäßrige Lösung der so erhaltenen Allylhydroxyethylcellulose hat eine Viskosität (nach Höppler bei 20 °C) von 21 mPa·s. Der MS beträgt 1,85, der DS 0,03. Der Trockengehalt ist 97,8 %, der Natriumchlorid-Gehalt 2,2 %.

### Beispiel 2

### Herstellung einer Allylglycidylhydroxyethylcellulose mit einem Allyl-Substitutionsgrad von 0,03 nach Verfahren D.

In einem 2 I Glasreaktor mit Blattrührer, Rückflußkühler mit Stickstoffüberleitung, Innenthermometer/Gaseinleitung werden 245 g Tylomer H20 (1,0 mol Monomereinheiten) in 610 g t-Butanol unter Inertgas (Stickstoff) suspendiert. Man gibt 4,0 g Natriumhydroxid (0,10 mol) gelöst in 160 g Wasser zu und rührt 30 min bei Raumtemperatur. Man gibt 4,6 g Allylglycidylether (0,04 mol) zu und heizt 6 h auf 85 °C. Es wird auf 30 °C abgekühlt und mit 6,0 g Essigsäure neutralisiert. Die Suspension wird abgesaugt. Der Filterkuchen wird zweimal in je 80 %igem wäßrigem Aceton und zweimal in je 1 l reinem Aceton suspendiert und abgesaugt. Das Produkt wird bei 70 °C im Trockenschrank getrocknet. Das Produkt hat einen Trockengehalt von 95,4 % und einen Natriumacetat-Gehalt von 6,1 %. Der MS beträgt 1,78, der DS 0,03.

### Beispiel 3

### Herstellung einer Allylhydroxyethylcellulose mit einem Allyl-Substitutionsgrad von 0,04 nach Verfahren B.

In einem 5 l Edelstahl-Autoklav mit Ankerrührer werden 628 g Tylomer H20 (2,5 mol Monomereinheiten) in 1800 g Isopropanol unter Inertgas (Stickstoff) suspendiert. Man gibt 20,0 g Natriumhydroxid gelöst in 400 g Wasser zu und rührt 30 min bei Raumtemperatur. Man gibt 17,2 g Allylchlorid (0,23 mol) zu, verschließt den Autoklaven druckdicht und heizt 6 h auf 80 °C. Es wird auf 25 °C abgekühlt, der Autoklav geöffnet und mit 30,0 g Essigsäure neutralisiert. Die Suspension wird abgesaugt. Der Filterkuchen wird zweimal in je 5 Liter 90 %igem wäßrigem Isopropanol und zweimal in je 5 l reinem Isopropanol suspendiert und abgesaugt. Das Produkt wird bei 70 °C im Trockenschrank getrocknet. Das Produkt hat einen Trockengehalt von 96,3 % und einen Natriumacetat-Gehalt von 5,9 %. Der MS beträgt 1,50, der DS 0,04.

### Beispiel 4

### Herstellung einer Allylglycidylhydroxyethylcellulose mit einem Allyl-Substitutionsgrad von 0,03 nach Verfahren C.

In einem 2 l Glasreaktor werden 22 g Natriumhydroxid (0,55 mol) in 665 g 85 %igem Isopropanol gelöst. Darin werden 85,0 g Fichten-Zellstoff suspendiert. Der Reaktor wird verschlossen und mit Stickstoff inertisiert. Es wird 30 min. bei Raumtemperatur gerührt, dann werden 72,6 g Ethylenoxid zugegeben. Es wird 1 h auf 40 °C und weitere 1,5 h auf 80 °C aufgeheizt. Es wird auf 70 °C abgekühlt und über 30 min 10 g 10 % iges Wasserstoffperoxid zugegeben. Die Temperatur wird noch 15 min lang gehalten. Nach dieser Behandlung ist der Polymerisationsgrad der Cellulose auf
n = 100 bis 200 abgebaut. Dann wird weiter auf 90 °C aufgeheizt und 5,7 g Allylglycidylether (0,05 mol) in 10 ml Isopropanol zugegeben und weitere 3 h bei 90 °C gerührt. Dann wird auf 30 °C abgekühlt und mit 49 g Salzsäure 37 %ig (0.50 mol) und 4,0 g Essigsäure neutralisiert. Die Suspension wird abgesaugt. Der Filterkuchen wird viermal in je 1,5 Liter 85 %igem wäßrigem Isopropanol und zweimal in je 1,5 l reinem Isopropanol suspendiert und abgesaugt. Das Produkt wird bei 70 °C im Trockenschrank getrocknet. Das Produkt hat einen Trockengehalt von 97,1 % und einen Natriumchlorid-Gehalt von 4,8 %. Der MS beträgt 1,97, der DS 0,03. Die Viskosität einer 2 % igen Lösung des Produktes in Wasser beträgt 5,4 mPa·s (gemessen mit einem Höppler-Viskosimeter bei 20 °C).

### Vergleichsbeispiel 5

### Herstellung einer Allylhydroxyethylcellulose mit einem Allyl-Substitutionsgrad von 0,05 (nicht erfindungsgemäß) nach Verfahren B.

In einem 5 l Edelstahl-Autoklav mit Ankerrührer werden 613 g eine Tylomer H20 (2,5 mol Monomereinheiten) in 1800 g Isopropanol unter Inertgas (Stickstoff) suspendiert. Man gibt 20,0 g Natriumhydroxid gelöst in 400 g Wasser zu und rührt 30 min bei Raumtemperatur. Man gibt 23,0 g Allylchlorid (0,30 mol) zu, verschließt den Autoklaven druckdicht und heizt 6 h auf 80 °C. Es wird auf 25 °C abgekühlt, der Autoklav geöffnet und mit 30,0 g Essigsäure neutralisiert. Die Suspension wird abgesaugt. Der Filterkuchen wird zweimal in je 5 Liter 90 %igem wäßrigem Isopropanol und zweimal in je 5 l reinem Isopropanol suspendiert und abgesaugt. Das Produkt wird bei 70 °C im Trockenschrank getrocknet. Das Produkt hat einen Trockengehalt von 97,3 % und einen Natriumacetat-Gehalt von 3,8 %. Der MS beträgt 1,56, der DS 0,05.

### Vergleichsbeispiel 6

### Herstellung einer Allylglycidylhydroxyethylcellulose mit einem Allyl-Substitutionsgrad von 0,05 (nicht erfindungsgemäß) nach Verfahren D.

In einem 2 l Glasreaktor mit Blattrührer, Rückflußkühler mit Stickstoffüberleitung, Innenthermometer/Gaseinleitung werden 245 g Tylomer H20 (1,0 mol Monomereinheiten) in 735 g Isopropanol unter Inertgas (Stickstoff) suspendiert. Man gibt 8,0 g Natriumhydroxid (0,20 mol) gelöst in 110 g Wasser zu und rührt 30 min bei Raumtemperatur. Man gibt 9,1 g Allylglycidylether (0,08 mol) zu und heizt 6 h auf 90 °C. Es wird auf 30 °C abgekühlt und mit 12,0 g Essigsäure neutralisiert. Die Suspension wird abgesaugt. Der Filterkuchen wird zweimal in je 80 %igem wässrigem Isopropanol und zweimal in je 1l reinem Aceton suspendiert und abgesaugt. Das Produkt wird bei 70 °C im Trockenschrank getrocknet. Das Produkt hat einen Trockengehalt von 99,1 % und einen Natriumacetat-Gehalt von 4,8 %. Der MS beträgt 1,59, der DS 0,05.

### Vergleichsbeispiel 7

### Herstellung einer Allylhydroxyethylcellulose mit einem Allyl-Substitutionsgrad von 0,06 (nicht erfindungsgemäß) nach Verfahren B.

In einem 5 l Edelstahl-Autoklav mit Ankerrührer werden 554 g Tylomer H20 (2,2 mol Monomereinheiten) in 2200 g Isopropanol unter Inertgas (Stickstoff) suspendiert. Man gibt 17,6 g Natriumhydroxid gelöst in 356 g Wasser zu und rührt 30 min bei Raumtemperatur. Man gibt 13,5 g Allylchlorid (0,176 mol) zu, verschließt den Autoklaven druckdicht und heizt 6 h auf 80 °C. Es wird auf 25 °C abgekühlt, der Autoklav geöffnet und mit 18,0 g Essigsäure neutralisiert. Die Suspension wird abgesaugt. Der Filterkuchen wird zweimal in je 5 Liter 85 %igem wäßrigem Isopropanol und zweimal in je 5 l reinem Isopropanol suspendiert und abgesaugt. Das Produkt wird bei 70 °C im Trockenschrank getrocknet. Das Produkt hat einen Trockengehalt von 97,2 % und einen Natriumacetat-Gehalt von 1,0 %. Der MS beträgt 1,67, der DS 0,06.

### Vergleichsbeispiel 8

### Herstellung einer Allylglycidylhydroxyethylcellulose mit einem Allyl-Substitutionsgrad von 0,08 (nicht erfindungsgemäß) nach Verfahren D.

In einem 2l Glasreaktor mit Blattrührer, Rückflußkühler mit Stickstoffüberleitung, Innenthermometer/Gaseinleitung werden 245 g Tylomer H20 (1,0 mol Monomereinheiten) in 735 g Isopropanol unter Inertgas (Stickstoff) suspendiert. Man gibt 8,0 g Natriumhydroxid (0,20 mol) gelöst in 110 g Wasser zu und rührt 30 min bei Raumtemperatur. Man gibt 13,7 g Allylglycidylether (0,12 mol) zu und heizt 4 h auf 80 °C. Es wird auf 30 °C abgekühlt und mit 12,0 g Essigsäure neutralisiert. Die Suspension wird abgesaugt. Der Filterkuchen wird zweimal in je 85 %igem wäßrigem Isopropanol und zweimal in je 1 l Aceton suspendiert und abgesaugt. Das Produkt wird bei 70 °C im Trockenschrank getrocknet. Das Produkt hat einen Trockengehalt von 95,8 % und einen Natriumacetatgehalt von 4,0 %. Der MS beträgt 1,57, der DS 0,08.

### Vergleichsbeispiel 9

### Herstellung einer Allylhydroxyethylcellulose mit einem Allyl-Substitutionsgrad von 0,09 (nicht erfindungsgemäß) nach Verfahren B.

In einem 5 l Edelstahl-Autoklav mit Ankerrührer werden 554 g Tylomer H20 (2,2 mol Monomereinheiten) in 2200 g Isopropanol unter Inertgas (Stickstoff) suspendiert. Man gibt 17,6 g Natriumhydroxid gelöst in 356 g Wasser zu und rührt 30 min bei Raumtemperatur. Man gibt 25,2 g Allylchlorid (0,33 mol) zu, verschließt den Autoklaven druckdicht und heizt 6 h auf 80 °C. Es wird auf 25 °C abgekühlt, der Autoklav geöffnet und mit 18,0 g Essigsäure neutralisiert. Die Suspension wird abgesaugt. Der Filterkuchen wird zweimal in je 5 Liter 85 %igem wäßrigem Isopropanol und zweimal in je 5 l reinem Isopropanol suspendiert und abgesaugt. Das Produkt wird bei 70 °C im Trockenschrank getrocknet. Das Produkt hat einen Trockengehalt von 97,7 % und einen Natriumacetat-Gehalt von 1,4 %. Der MS beträgt 1,69, der DS 0,09.

### Vergleichsbeispiel 10

### Herstellung einer Allylhydroxyethylcellulose mit einem Allyl-Substitutionsgrad von 0,10 (nicht erfindungsgemäß) nach Verfahren B.

In einem 50 l Edelstahl-Mischaggregat werden 2,51 kg Tylomer H20 (10,0 mol Monomereinheiten) in 7,5 kg Isopropanol unter Inertgas (Stickstoff) vermischt. Man gibt 120 g Natriumhydroxid gelöst in 1,6 kg Wasser zu, schließt das Mischaggregat und rührt 30 min bei Raumtemperatur. Über eine Schleuse gibt man 115 g Allylchlorid (1,5 mol), gelöst in 200 g Isopropanol zu und heizt 6 h auf 80 °C. Es wird auf 25 °C abgekühlt und mit 120 g Essigsäure neutralisiert. Die Suspension wird abgesaugt. Der Filterkuchen wird zweimal in je 25 Liter 85 %igem wäßrigem Isopropanol und zweimal in je 25 l reinem Isopropanol suspendiert und abgesaugt. Das Produkt wird bei 70 °C im Trockenschrank getrocknet. Das Produkt hat einen Trockengehalt von 97,3 % und einen Natriumacetatgehalt von 4,0 %. Der MS beträgt 1,62, der DS 0,1.

### Vergleichsbeispiel 11

### Herstellung einer Vinylester-Polymerdispersion unter Verwendung von Hydroxyethylcellulose.

Das verwendete Monomergemisch besteht aus 25 % ®Veova 10 (Vinylester α-verzweigter C₁₀- Carbonsäuren, Shell) und 75 % Vinylacetat. In einem 2 Liter Reaktor mit Planschliff und Deckel werden 423,09 g entionisiertes Wasser vorgelegt und unter Rühren 14 g Hydroxyethylcellulose (Tylomer H 20, entsprechend 1,06 % bezogen auf die fertige Polymerdispersion), bei Raumtemperatur zugegeben und gelöst. Danach werden der Reihe nach zugesetzt:

| | |
|---|---|
| 3,50 g | Borax |
| 11,50 g | Emulsogen EPA 073 |
| 20,00 g | Emulsogen EPN 287 |
| 0,70 g | Kaliumperoxidisulfat |
| 1,40 g | Essigsäure (99 - 100 %) |
| 59,40 g | Initiatorlösung (1,17 %ige Kaliumperoxodisulfat-Lösung) |
| 70,00 g | Monomergemisch |

Die Emulsion wird innerhalb von 30 Minuten auf eine Temperatur von 74 - 77 °C erhitzt, die 15 Minuten gehalten wird. Danach werden 630,00 g Monomergemisch mit einer Dosiergeschwindigkeit von 4,49 ml/min und 85,61 g Initiatorlösung (1,17 %ig) mit einer Dosiergeschwindigkeit von 0,51 ml/min aus zwei getrennten Dosimaten zugegeben. Die Polymerisationstemperatur stellt sich bei 80 °C ein. 630 g Monomergemisch werden über eine Zeitspanne von 2 h 40 min hinzugefügt, die Initiatorlösung über 2 h 50 min.

Nach beendeter Zugabe der Chemikalien wird die Reaktionstemperatur von 80 °C über 2 h beibehalten. Danach wird die Dispersion abgekühlt und bei 40 °C mit 2 g ®Mergal K 9 N, (Riedel de Haen) konserviert. Die physikalischen Eigenschaften der Polymerdispersionen sind in den Tabellen 1 und 2 zusammengestellt.

Beurteilung: Die Viskosität der Dispersion bei niedrigem Schergefälle ist mit 11.700 mPa·s an der unteren tolerierbaren Grenze. Der Koagulatanteil (Sieb 40µm) ist sehr hoch (Tabelle 2).

### Vergleichsbeispiel 12

Anstelle von 14 g Tylomer H 20 wurden nur 7,0 g eingesetzt.
Die Viskosität der Dispersion ist viel zu niedrig, die Koagulatanteile zu hoch (Tabelle 2).

### Vergleichsbeispiel 13

Anstelle von 14 g Tylomer H 20 (Viskositätsstufe 20 mPa·s bei 2 %) wurden 14 g Tylomer H200 (Viskositätsstufe 200 mP·as bei 2 %) eingesetzt.
Die Dispersion ist generell als gut brauchbar zu beurteilen, jedoch verursacht ihre hohe Viskosität Rühr- und Förderprobleme.

### Vergleichsbeispiel 14

Anstelle von 14 g Tylomer H 20 (Viskositätsstufe 20 mPa·s bei 2 %) wurden 7,0 g Tylomer H 200 (Viskositätsstufe 200 mPa·s bei 2 %) eingesetzt.
Die Viskosität der Dispersion im low-shear-Bereich ist zu niedrig, die Teilchengröße zu hoch (Tabelle 2).

### Vergleichsbeispiel 15

Anstelle von 14 g Tylomer H 20 wurden 14 g Allylhydroxyethylcellulose mit einem DS(Allyl) von 0,12 eingesetzt. Der Ansatz koagulierte während der Reaktion.

### Vergleichsbeispiel 16

Anstelle von 14 g Tylomer H 20 wurde 7,0 g (entsprechend 0,53 % bezogen auf die Polymerdispersion) Allylhydroxyethylcellulose mit einem DS(Allyl) von 0,1 eingesetzt.
Die Viskosität der erhaltenen Dispersion bei niedrigem Schergefälle (5300 mPa·s bei 1,0 s⁻¹) ist gering. Bei hohem Schergefälle zeigt die Dispersion dilatantes Fließverhalten. Der Polymerfilm weist eine zu hohe Wasseraufnahme auf (Tabelle 2).

### Vergleichsbeispiel 17

Anstelle von 14 g Tylomer H 20 wurden 7,0 g einer Allylhydroxyethylcellulose mit einem DS(Allyl) von 0,09 verwendet.
Die Viskosität im unteren Scherbereich ist zu gering, dagegen findet man eine kaum abfallende Viskosität im hohen Scherbereich. Gemessen wird eine zu hohe Wasseraufnahme des Polymerfilms und eine zu hohe mittlere Teilchengröße (Tabelle 2).

### Vergleichsbeispiel 18

Anstelle von 14 g Tylomer H 20 wurden 7,0 g einer
Glycidylallylhydroxyethylcellulose mit einem DS(Allyl) von 0,08 verwendet.
Die Viskosität im unteren Scherbereich ist zu gering, dagegen findet man eine kaum abfallende Viskosität im hohen Scherbereich. Gemessen wird eine zu hohe Wasseraufnahme des Polymerfilms und zu hohe mittlere Teilchengröße (Tabelle 2).

### Vergleichsbeispiel 19

Anstelle von 14 g Tylomer H 20 wurden 7,0 g einer Allylhydroxyethylcellulose mit einem DS(Allyl) von 0,06 eingesetzt.
Die Viskosität im unteren Scherbereich ist gerade noch gut, dagegen weist der Polymerfilm eine zu hohe Wasseraufnahme und zu hohe Koagulatanteile im 100µm- und 40µm-Siebtest auf (Tabelle 2).

### Vergleichsbeispiel 20

Anstelle von 14 g Tylomer H 20 werden 7,0 g einer Glycidylallylhydroxyethylcellulose mit einem DS(Allyl) von 0,05 verwendet.
Die Rheologie der Dispersion ist als gut zu beurteilen (Tabelle 1). Mangelhaft ist die zu hohe Wasseraufnahme (Tabelle 2).

### Vergleichsbeispiel 21

Anstelle von 14 g Tylomer H 20 werden 7,0 g einer Allylhydroxyethylcellulose mit einem DS(Allyl) von 0,05 verwendet.
Die Rheologie der Dispersion ist als gut zu beurteilen (Tabelle 1). Mangelhaft sind die zu hohe Wasseraufnahme und hohe Koagulatmengen in den Siebtests (Tabelle 2).

### Beispiel 22

Anstelle von 14 g Tylomer H 20 werden 7,0 g einer Allylhydroxyethylcellulose mit einem DS(Allyl) von 0,04 verwendet.
Die Polymerdispersion zeigt in allen anwendungstechnischen und rheologischen Tests zufriedenstellende Resultate (Tabellen 1 und 2).

### Beispiel 23

Anstelle von 14 g Tylomer H 20 werden 7,0 g einer Glycidylallylhydroxyethylcellulose mit einem DS(Allyl) = 0,03 verwendet.
Die Polymerdispersion zeigt in allen anwendungstechnischen und rheologischen Tests zufriedenstellende Resultate (Tabellen 1 und 2).

### Beispiel 24

Anstelle von 14 g Tylomer H 20 werden 7,0 g einer Allylhydroxyethylcellulose mit einem DS(Allyl) von 0,03 verwendet.
Die Polymerdispersion zeigt in allen anwendungstechnischen und rheologischen Tests zufriedenstellende Resultate (Tabelle 1 und 2).

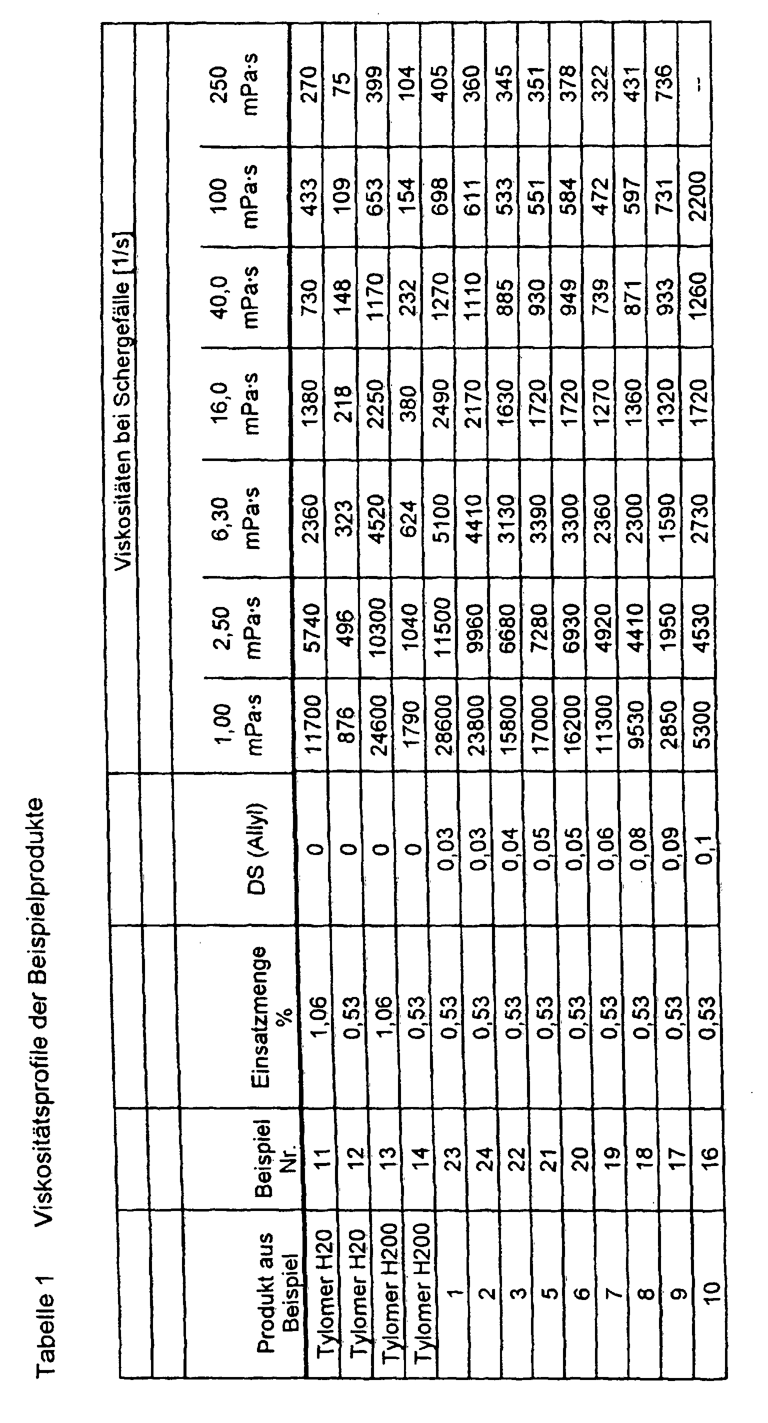

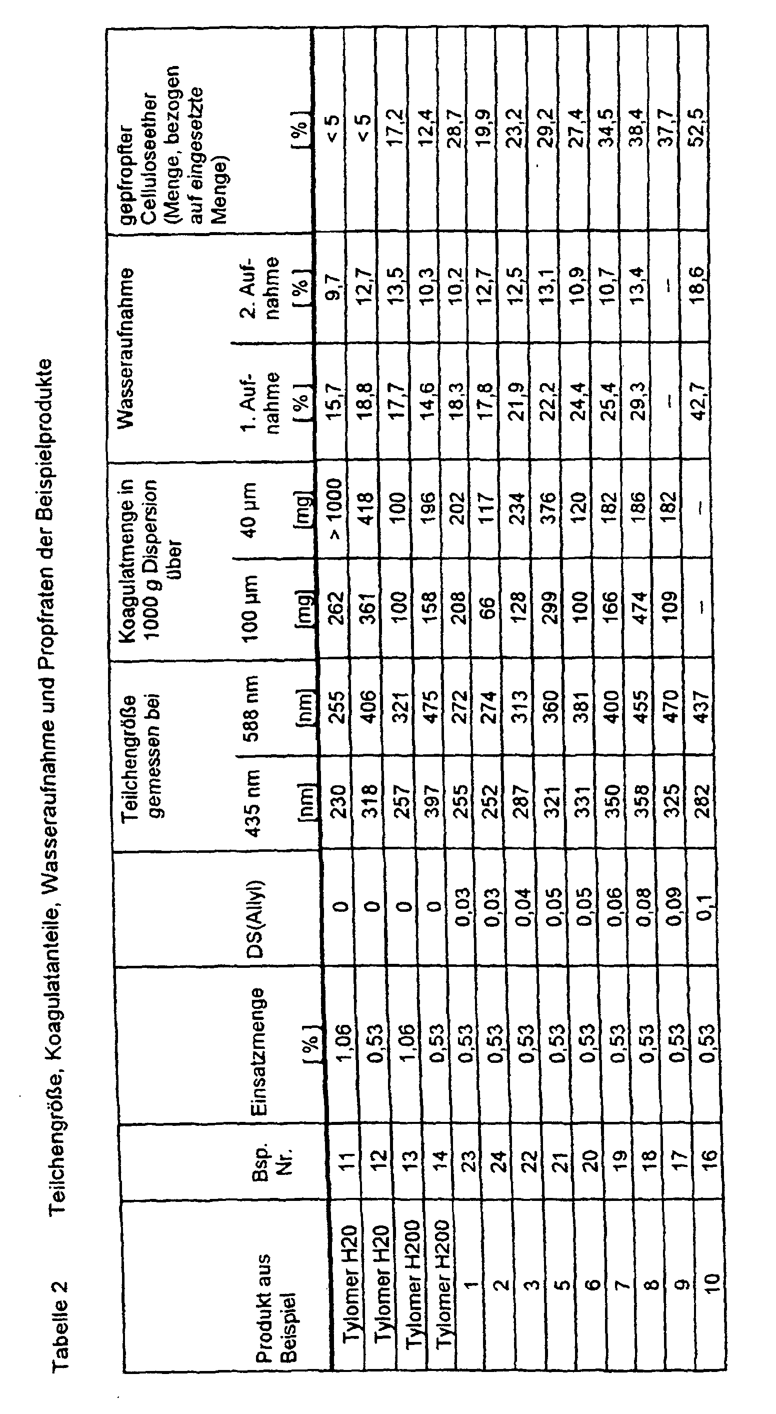

## Patentansprüche

1. Wasserlösliche, nichtionische Celluloseether aus der Gruppe der Alkylcellulosen und Hydroxyalkylcellulosen mit einem durchschnittlichen Polymerisationsgrad unterhalb von 900, die durchschnittlich mit 0,01 bis 0,04 2-Propenylgruppen pro Anhydroglucoseeinheit substituiert sind.

2. Celluloseether nach Anspruch 1 der allgemeinen Formel
[C₆H₇O₂(OR¹)(OR²)(OR³)]ₙ
wobei
C₆H₇O₂ eine Anhydroglucoseeinheit,
n 50 - 500, insbesondere 100 - 300,
und R¹, R² und R³ unabhängig voneinander eine Polyalkylenoxidkette der allgemeinen Form 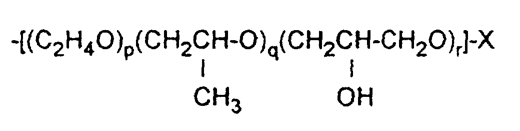 mit X = H, CH₃, C₂H₅ oder CH₂CH = CH₂
darstellt, worin
p, q und r unabhängig voneinander in R¹, R² und R³ jeweils unabhängig Werte von 0 bis 4 annehmen können, die Summe aller (p+q+r) addiert über R¹, R² und R³ pro Anhydroglucoseeinheit durchschnittlich größer als 1,3 und kleiner als 4,5 ist und wobei die Reihenfolge der Oxyalkyleinheiten in der Polyalkylenoxidkette beliebig ist und die durchschnittliche Anzahl der CH₂CH = CH₂-Gruppen pro Anhydroglucoseeinheit (DS Allyl) 0,01 bis 0,04 beträgt.

3. Celluloseether nach Anspruch 1, **dadurch gekennzeichnet, daß** die durchschnittliche Anzahl der CH₂CH = CH₂-Gruppen pro Anhydroglucoseeinheit (DS Allyl) 0,02 bis 0,03 beträgt.

4. Celluloseether nach Anspruch 2, **dadurch gekennzeichnet, daß** sie 2-Propenylether von
Hydroxyethylcellulose mit 1,3 < p < 4,5, q = 0, r = 0 oder von
Hydroxypropylcellulose mit p = 0, 1,3 < q < 4,5, r = 0 oder von
Dihydroxypropylcellulose mit p = 0, q = 0, 1,3 < r < 4,5 sind.

5. Verfahren zur Herstellung der Celluloseether nach Anspruch 1 durch Veretherung von Cellulose mit einem Veretherungsmittel aus der Gruppe der Alkylhalogenide und der Alkylenoxide und Veretherung mit einem Allylhalogenid oder einem Allylglycidylether unter Basenkatalyse.

6. Verfahren zur Herstellung der Celluloseether nach Anspruch 1 durch Veretherung von Celluloseethern aus der Gruppe der Alkylcellulosen und Hydroxyalkylcellulosen mit einem Allylhalogenid oder einem Allylglycidylether unter Basenkatalyse.

7. Verfahren zur Herstellung der Celluloseether nach Anspruch 1 durch Veretherung von Cellulose mit einem Veretherungsmittel aus der Gruppe Ethylenoxid, Propylenoxid und Glycidalkohol und mit einem Allylhalogenid oder einem Allylglycidylether unter Basenkatalyse.

8. Verfahren zur Herstellung der Celluloseether nach Anspruch 1 durch Veretherung von Hydroxyethylcellulose, Hydroxypropylcellulose, Dihydroxypropylcellulose oder einem Celluloseether mit mehreren der genannten Hydroxyalkylsubstituenten mit einem Allylhalogenid oder einem Allylglycidylether unter Basenkatalyse.

9. Verwendung der Celluloseether gemäß Anspruch 1 als Schutzkolloide bei der Herstellung von wäßrigen Polymerdispersionen.

10. Wäßrige Polymerdispersion, hergestellt durch radikalisch initiierte Polymerisation von ethylenisch ungesättigten Monomeren in wäßriger Emulsion in Gegenwart von 0,2 bis 5,0 Gew.-%, bezogen auf die Gesamtmenge der eingesetzten Monomeren, Celluloseether gemäß Anspruch 1.

## Claims

1. A water-soluble, nonionic cellulose ether selected from the group consisting of alkylcelluloses and hydroxyalkylcelluloses having an average degree of polymerization of less than 900 which is substituted by, on average, from 0.01 to 0.04 2-propenyl groups per anhydroglucose unit.

2. A cellulose ether as claimed in claim 1 having the formula
[C₆H₇O₂(OR¹)(OR²)(OR³)]ₙ
where
C₆H₇O₂ is an anhydroglucose unit,
n is 50 - 500, in particular 100 - 300,
and R¹, R² and R³ are each, independently of one another, a polyalkylene oxide chain of the formula 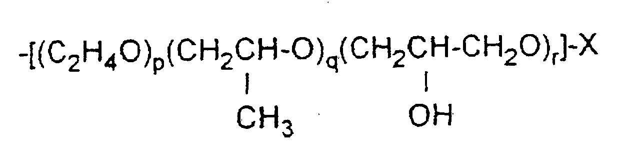 where X = H, CH₃, C₂H₅ or CH₂CH = CH₂
where
p, q and r independently of one another in R¹, R² and R³ can each independently assume values from 0 to 4, the sum of all (p+q+r) added over R¹, R² and R³ per anhydroglucose unit is, on average, greater than 1.3 and less than 4.5, the order of the oxyalkylene units in the polyalkylene oxide chain can be any order desired and the average number of CH₂CH = CH₂ groups per anhydroglucose unit (DS allyl) is from 0.01 to 0.04.

3. A cellulose ether as claimed in claim 1, wherein the average number of CH₂CH = CH₂ groups per anhydroglucose unit (DS allyl) is from 0.02 to 0.03.

4. A cellulose ether as claimed in claim 2 which is a 2-propenyl ether of hydroxyethylcellulose where 1.3 < p < 4.5, q = 0, r = 0 or of hydroxypropylcellulose where p = 0, 1.3 < q < 4.5, r = 0 or of dihydroxypropylcellulose where p = 0, q = 0, 1.3 < r < 4.5.

5. A process for preparing a cellulose ether as claimed in claim 1 by etherification of cellulose with an etherifying agent selected from the group consisting of alkyl halides and alkylene oxides and etherification with an allyl halide or an allyl glycidyl ether using base catalysis.

6. A process for preparing a cellulose ether as claimed in claim 1 by etherification of a cellulose ether selected from the group consisting of alkylcelluloses and hydroxyalkylcelluloses with an allyl halide or an allyl glycidyl ether using base catalysis.

7. A process for preparing a cellulose ether as claimed in claim 1 by etherification of cellulose with an etherifying agent selected from the group consisting of ethylene oxide, propylene oxide and glycidyl alcohol and with an allyl halide or an allyl glycidyl ether using base catalysis.

8. A process for preparing a cellulose ether as claimed in claim 1 by etherification of hydroxyethylcellulose, hydroxypropylcellulose, dihydroxypropylcellulose or a cellulose ether having a plurality of the hydroxyalkyl substituents mentioned with an allyl halide or an allyl glycidyl ether using base catalysis.

9. The use of a cellulose ether as claimed in claim 1 as protective colloid in the preparation of aqueous polymer dispersions.

10. An aqueous polymer dispersion prepared by free-radical-initiated polymerization of ethylenically unsaturated monomers in aqueous emulsion in the presence of from 0.2 to 5.0% by weight, based on the total amount of monomers used, of cellulose ethers as claimed in claim 1.

## Revendications

1. Ethers de cellulose non ioniques, hydrosolubles dans le groupe des alkylcelluloses et des hydroxyalkylcelluloses avec un degré de polymérisation moyen inférieur à 900, qui sont substitués en moyenne par 0,01 à 0,04 groupe 2-propényle par motif d'anhydroglucose.

2. Ethers de cellulose selon la revendication 1 de formule générale
[C₆H₇O₂(OR¹)(OR²)(OR³)]ₙ
dans laquelle
C₆H₇O₂ représente un motif anhydroglucose,
n représente 50-500, en particulier 100-300,
et R¹, R² et R³ représentent indépendamment les uns des autres une chaîne polyoxyde d'alkylène de forme générale 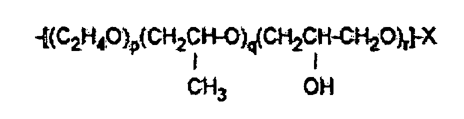 avec X = H, CH₃, C₂H₅ ou CH₂CH=CH₂, dans laquelle p, q et r indépendamment les uns des autres peuvent prendre dans R¹, R² et R³ respectivement des valeurs indépendantes de 0 à 4, la somme de tous les (p + q + r) ajoutés sur R¹, R² et R³ est en moyenne par motif d'anhydroglucose supérieure à 1,3 et inférieure à 4,5 et dans laquelle la suite des motifs oxyalkylène dans la chaîne polyoxyde d'alkylène est quelconque et le nombre moyen des groupes CH₂CH=CH₂ s'élève à 0,01 à 0,04 par motif d'anhydroglucose (DS allyle).

3. Ethers de cellulose selon la revendication 1, **caractérisés en ce que** le nombre moyen des groupes CH₂CH=CH₂ par motif anhydroglucose (DS allyle) est entre 0,02 et 0,03.

4. Ethers de cellulose selon la revendication 2, **caractérisés en ce qu'**ils sont des 2-propényléthers
d'hydroxyéthylcellulose avec 1,3 < p < 4,5, q = 0, r = 0 ou
d'hydroxypropylcellulose avec p = 0, 1,3 < q < 4,5, r = 0 ou
de dihydroxypropylcellulose avec p = 0, q = 0, 1,3 < r < 4,5.

5. Procédé pour la préparation des éthers de cellulose selon la revendication 1 par éthérification de cellulose avec un agent d'éthérification dans le groupe des halogénures d'alkyle et des oxydes d'alkylène et éthérification avec un halogénure d'allyle ou un allylglycidyléther en catalyse basique.

6. Procédé pour la préparation des éthers de cellulose selon la revendication 1 par éthérification d'éthers de cellulose dans le groupe des alkylcelluloses et des hydroxyalkylcelluloses avec un halogénure d'allyle ou un allylglycidyléther en catalyse basique.

7. Procédé pour la préparation des éthers de cellulose selon la revendication 1 par éthérification de cellulose avec un agent d'éthérification dans le groupe de l'oxyde d'éthylène, l'oxyde de propylène et le glycidylalcool et avec un halogénure d'allyle ou un allylglycidyléther en catalyse basique.

8. Procédé pour la préparation des éthers de cellulose selon la revendication 1 par éthérification d'hydroxyéthylcellulose, hydroxypropylcellulose, dihydroxypropylcellulose ou d'un éther de cellulose ayant plusieurs des substituants hydroxyalkyle mentionnés avec un halogénure d'allyle ou un allylglycidyléther en catalyse basique.

9. Utilisation des éthers de cellulose selon la revendication 1 comme colloïdes protecteurs pour la préparation de dispersions aqueuses de polymères.

10. Dispersion aqueuse de polymères, préparée par polymérisation initiée par voie radicalaire de monomères éthyléniquement insaturés en émulsion aqueuse en présence de 0,2 à 5,0 % en poids, par rapport à la quantité totale des monomères mis en oeuvre, d'éthers de cellulose selon la revendication 1.
